# DEMANDE DE BREVET EUROPEEN

(11) **EP 4 371 523 A1**
(43) Date de publication de la demande: **22.05.2024**
(21) Numéro de dépôt: 23211092.4
(22) Date de dépôt: 21.11.2023
(51) Int. Cl.: A61C 1/08, A61C 8/00, A61C 13/271, B33Y 80/00, A61C 13/225

(54) **GUIDE CHIRURGICAL POUR LA POSE D'IMPLANTS DENTAIRES**

(30) Priorité: 21.11.2022 FR 2212115
(71) Demandeur: BIOTECH DENTAL, 13300 Salon-de-Provence (FR)
(72) Inventeur: KELLER, Pierre, 67000 Strasbourg (FR)
(74) Mandataire: Barbot, Willy

(57) **Abrégé**

L'invention concerne un guide (1) chirurgical pour la pose d'implants dentaires, comprenant une base (2) apte à être fixée à l'os maxillaire ou mandibulaire, une gouttière (3) apte à être fixée à la base (2) et à être positionnée dans l'espace par rapport au référentiel dent ou anatomie restant en bouche, et un guide de perçage (4) apte à être fixé à la base (2) et comprenant au moins un alésage (5) de guidage d'un foret et où la base :
- est sensiblement rigide ;
- s'appuie généreusement sur les muqueuses ;
- épouse sensiblement la forme d'un maxillaire ou d'une mandibule et présente une partie centrale disposée sur la face interne de la mâchoire qui constitue un appui lingual ou palatal ; et
- est largement ajourée le long de la crête maxillaire ou mandibulaire, afin de laisser passer des dents encore présentes en début d'opération ou des implants à installer en cours d'opération.

## Description

### Domaine technique

L'invention concerne un guide chirurgical pour la pose d'implants dentaires.

### Art antérieur

Il est connu d'utiliser des guides chirurgicaux pour la pose d'implants dentaires. De tels guides ont pour fonction de guider le praticien au plus près, notamment lors du perçage de l'os maxillaire ou mandibulaire, afin de mettre en place un ou plusieurs implants.

Pour assurer sa fonction correctement, il va de soi qu'un tel guide doit être positionné relativement à un référentiel anatomique. Pour cela un tel guide prend appui sur les éléments anatomiques restants, typiquement des dents restantes.

Maintenant, une telle stratégie n'est pas adaptée dans le cas d'un édentement important ou complet. Dans un tel cas, un tel guide prend appui le plus souvent sur des éléments anatomiques extérieurs à la bouche, tel que les os du visage. Cependant une telle approche est très volumineuse et constitue une gêne importante pour le patient.

Pour parer à ces difficultés, de nouvelles stratégies ont été développées dont celle décrite dans le brevet US 11,160,639. Dans celui-ci, il est décrit une méthode de pose d'un implant dentaire utilisant un guide chirurgical comprenant une base qui est fixée directement sur l'os maxillaire ou mandibulaire, après retrait de la gencive chevauchante et ceci uniquement sur la face vestibulaire de l'os. Cette base est ensuite associée à un repère anatomique pour ajuster son positionnement, avant d'être couplée à un guide de perçage qui permet, après l'extraction des dents, d'implanter au plus juste, les piliers supportant l'implant dentaire. Maintenant, cette méthode nécessite une forte expertise du praticien pour ajuster correctement le guide. Pour se faire, le praticien doit, après retrait de la gencive, effectuer une réduction de l'os pour positionner le guide. Le praticien doit ensuite adapter la position de la base et, pour se faire, dispose d'un modèle, pour l'aider dans cette étape d'ajustement. De ce fait, la mise en oeuvre de tels guides chirurgicaux constitue à chaque fois un vrai défi pour le praticien.

### Résumé de l'invention

L'inventeur a maintenant développé un nouveau guide chirurgical réalisé sur mesure pour un patient donné, en général par impression 3D. Le guide chirurgical s'appuie parfaitement sur les muqueuses de la face la face palatine en plus de la face vestibulaire avec une ouverture au niveau de la crête maxillaire ou mandibulaire pour permettre l'extraction de dents et la pose des implants et évite ainsi d'ouvrir largement la gencive pour être mis en place. Les caractéristiques du guide chirurgical ainsi développé ont en outre permis une parfaite association du guide sur la mandibule ou le maxillaire de façon simplifiée pour le praticien. La qualité de cette association s'est révélée si bonne qu'elle s'est révélée quasi-équivalente aux dispositifs prenant appui sur des éléments anatomiques extérieurs à la bouche, tel que les os du visage. A noter que la qualité de l'association est telle qu'il n'a pas été nécessaire d'utiliser de fixation par vis ou pins sur la face palatine de la base.

Pour cela, l'invention a pour objet un guide chirurgical pour la pose d'implants dentaires, comprenant une base apte à être fixée à l'os maxillaire ou mandibulaire, une gouttière apte à être fixée à la base et à être positionnée dans l'espace par rapport au référentiel dent ou anatomie restant en bouche, et un guide de perçage apte à être fixé à la base et comprenant au moins un alésage de guidage d'un foret, **caractérisé en ce que** la base :
- est sensiblement rigide ;
- s'appuie généreusement sur les muqueuses ;
- épouse sensiblement la forme d'un maxillaire ou d'une mandibule et présente une partie centrale disposée sur la face interne de la mâchoire qui constitue un appui lingual ou palatal ; et
- est largement ajourée le long de la crête maxillaire ou mandibulaire, afin de laisser passer des dents encore présentes en début d'opération ou des implants à installer en cours d'opération.

Des caractéristiques ou des modes de réalisation particuliers, utilisables seuls ou en combinaison, sont :
- la base est fixée à l'os au moyen de vis et/ou de pins,
- la base est fixée à l'os au moyen de vis et/ou de pins sur la seule face vestibulaire. La partie centrale de la base disposée sur la face interne de la mâchoire qui constitue un appui lingual ou palatal ne comprend aucune fixation dans l'os,
- le guide de perçage comprend, pour chaque alésage, une douille amovible et clipsable,
- le guide comprend encore une prothèse apte à être fixée sur la base et présentant un trou au droit de chaque alésage,
- un trou présente un diamètre supérieur d'un jeu au diamètre d'un pilier, apte à être fixé à un implant par une extrémité et à la prothèse par l'autre extrémité,
- la gouttière est fixée à la base au moyen de vis, le guide de perçage est fixé à la base au moyen de vis et la prothèse est fixée à la base au moyen de vis,
- la gouttière, le guide de perçage et la prothèse se fixent alternativement à la base, un à la fois, sensiblement en lieu et place l'un de l'autre et présentent une interface de fixation sensiblement identique, apte à être fixée à une unique interface de la base,
- la base est réalisée en titane, en alliage chrome-cobalt ou en résine biocompatible de classe I ou IIa, la gouttière est réalisée en résine biocompatible de classe I, le guide de perçage est réalisé en titane, en alliage chrome-cobalt ou en résine biocompatible de classe I ou IIa et la prothèse est réalisée en résine biocompatible de classe IIa.

Selon un deuxième aspect de l'invention, un procédé de mise en place d'un tel guide et de pose d'un implant dentaire comprenant les étapes suivantes :
- assemblage de la base et de la gouttière,
- mise en place en bouche de l'assemblage, la gouttière assurant le positionnement par rapport au référentiel dent ou anatomie restant en bouche, de l'assemblage et donc de la base sensiblement rigide, s'appuyant généreusement sur les muqueuses, et qui épouse sensiblement la forme d'un maxillaire ou d'une mandibule et présente une partie centrale disposée sur la face interne de la mâchoire qui constitue un appui lingual ou palatal,
- fixation, à l'os, de la base ;
- retrait de la gouttière,
- extraction éventuelle des dents par le jour de la base,
- fixation du guide de perçage à la base,
- perçage de l'os,
- mise en place des implants dans l'os,
- retrait du guide de perçage,
- assemblage de la prothèse à la base,
- mise en place des piliers dans les implants, préférentiellement par vissage,
- retrait de la base, et
- fixation de la prothèse aux piliers, préférentiellement par collage.

### Brève description des dessins

L'invention sera mieux comprise à la lecture de la description qui suit, faite uniquement à titre d'exemple, et en référence aux figures en annexe dans lesquelles :
La figure 1 montre, en vue perspective, une base,
La figure 2 montre, en vue perspective, une gouttière,
La figure 3 montre, en vue de dessous, la gouttière de la figure 2,
La figure 4 montre, en vue perspective, un guide de perçage,
La figure 5 montre, en vue perspective, une douille de perçage,
La figure 6 montre, en vue perspective, une prothèse,
La figure 7 montre, en vue de dessus, la prothèse de la figure 6,
La figure 8 montre, en vue perspective, le montage de la gouttière sur la base,
La figure 9 montre, en vue perspective, le montage du guide de perçage sur la base,
La figure 10 montre, en vue perspective, le montage de la prothèse sur la base.

### Description des modes de réalisation

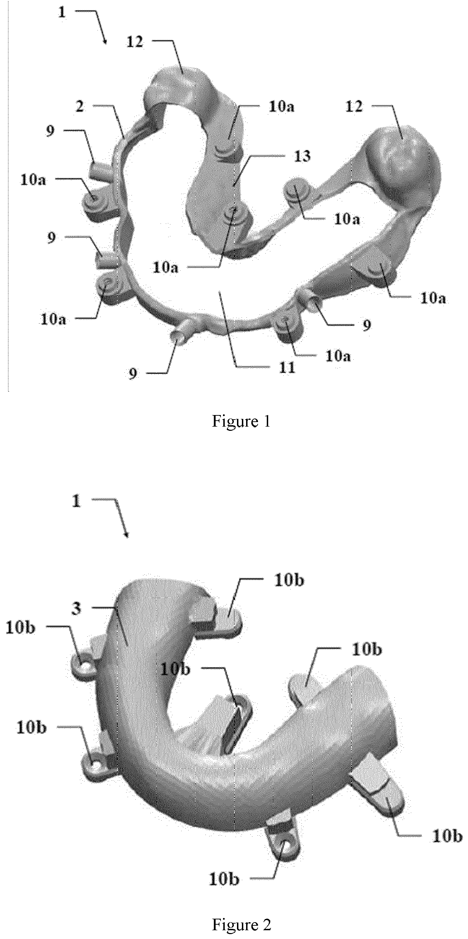

En référence aux figures 1-7, l'invention concerne un guide 1 chirurgical pour la pose d'implants dentaires.

Il va de soi que, dans la présente, tous les éléments décrits sont réalisés sur mesure en fonction des mensurations particulières du patient et de sa condition anatomique et pathologique.

Le guide 1 comprend une base 2, une gouttière 3, un guide de perçage 4, et éventuellement une prothèse 7, composants que l'on nomme génériquement étages.

La base 2, plus particulièrement illustrée à la figure 1, épouse sensiblement la forme d'un maxillaire ou d'une mandibule d'un patient donné. Elle est largement ajourée, d'un jour 11, le long de la crête maxillaire ou mandibulaire, afin de laisser passer des dents encore présentes en début d'opération ou des implants à installer en cours d'opération.

Afin de correctement assurer sa fonction de référence, reprenant le référentiel anatomique, la base 2 est rigide. Ainsi, la base 2 présente une conception proche d'un châssis.

De plus, la base s'appuie, en plus des points de fixation osseuse et le plus généreusement possible sur les muqueuses. A ce titre, la base présente une surface d'au moins 50% en appui sur les muqueuses, de préférence une surface d'au moins 60%. De la sorte, la base crée une base solide pour les étages successifs 4, 7 du guide 1. Ainsi, sa partie centrale 13, soit tout le V disposé sur la face interne de la mâchoire, est plus particulièrement destiné à réaliser un appui lingual ou palatal. Typiquement, l'appui lingual ou palatal présente une surface similaire à l'appui vestibulaire.

A noter que, dans la mesure du possible la base 2 repose également sur des dents, dans la mesure où celles-ci subsistent. Un exemple de tels appuis dentaires 12 est visible à la figure 1.

La base 2 est apte à être fixée à l'os maxillaire ou mandibulaire, typiquement au moyen d'un premier jeu de fixation 9 et de vis et/ou pins.

La base 2 est destinée à servir de fondations au guide 1 chirurgical pendant toute la durée de l'opération. La base 2 est encore destinée à rester en place sur la mâchoire du patient. Il convient donc que la base 2 soit correctement positionnée relativement à un référentiel anatomique.

Maintenant, la qualité de l'association de la base du guide selon l'invention avec les muqueuses du maxillaire ou de la mandibule du patient est telle qu'aucune fixation de la base à l'os n'est requise sur la face palatine comme cela est présenté à la figure 1.

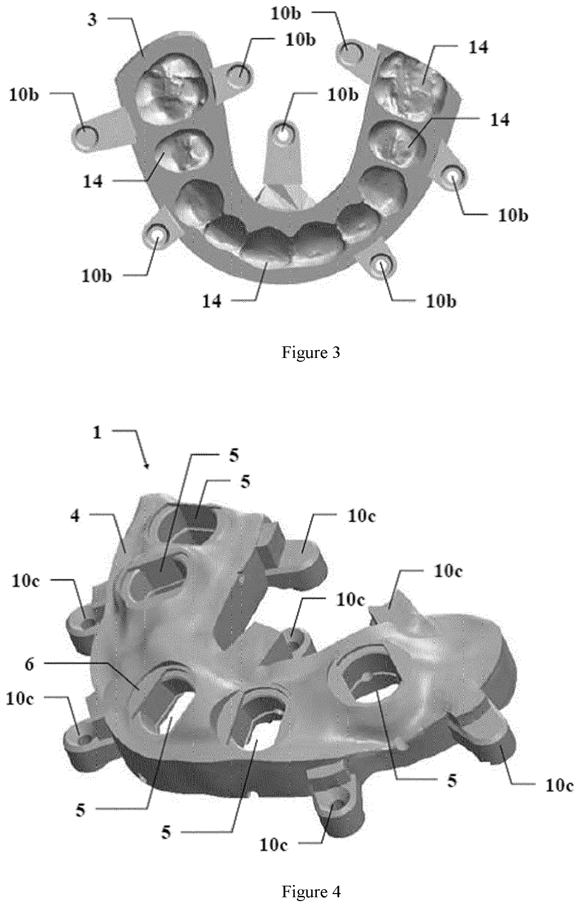

Le positionnement relativement à un référentiel anatomique est échu à la gouttière 3. La gouttière 3 est plus particulièrement illustrée aux figures 2 et 3. Pour cela, la gouttière 3 est apte à être fixée à la base 2. Ceci est typiquement réalisé au moyen d'un deuxième jeu de fixations 10, déclinées 10a pour la base 2, 10b pour la gouttière 3, 10c pour le guide de perçage 4 et 10d pour la prothèse 7.

La gouttière 3 est encore apte à être positionnée dans l'espace par rapport au référentiel dent ou anatomie restant en bouche. Pour cela la gouttière 3 comprend au moins un moulage 14 inverse des éléments restants en bouche. Ces éléments restants en bouche peuvent être des dents de la mâchoire traitée, des dents de la mâchoire opposée, ou tout autre élément présent dans la bouche. De manière avantageuse, telle qu'illustrée aux figures 2, 3, la gouttière 3 comprend au moins un moulage 14 inverse de dents destinées à être extraites pour être remplacées par la prothèse implantaire.

Comme détaillé plus avant dans le procédé de mise en place du guide 1 chirurgical, la gouttière 3 est utilisée, assemblée avec la base 2, en début d'opération, lorsque les éléments anatomiques voués à disparaître, telles les dents à extraire, sont encore présents, pour positionner la gouttière 3 relativement à ces éléments anatomiques impermanents et ainsi positionner correctement la base 2 dans un référentiel anatomique. La base 2 ainsi positionnée par la gouttière 3, à laquelle elle est assemblée au moyen des deuxièmes jeux de fixations respectifs 10a et 10b, est ensuite fixée à l'os maxillaire ou mandibulaire traité, au moyen du premier jeu de fixations 9, de préférence uniquement sur sa face vestibulaire. Cette fixation osseuse permet ainsi de mémoriser le référentiel anatomique. La fonction de la gouttière 3 est alors terminée. Elle peut être retirée et remisée.

La gouttière 3 retirée, peut laisser la place à un guide de perçage 4. Le guide de perçage 4, plus particulièrement illustrée à la figure 4, est apte à être fixé à la base 2 au moyen des deuxièmes jeux de fixations respectifs 10a et 10c. Le guide de perçage 4 se monte sensiblement en lieu et place de la gouttière 3. Le guide de perçage 4 est ainsi positionné relativement à la base 2 et ainsi relativement au référentiel anatomique. Le praticien est ainsi sûr de percer et de placer les implants au bon endroit et selon le bon axe. Le guide de perçage 4 comprend au moins un alésage 5. Un alésage 5 permet le guidage d'un foret pour le perçage de l'os sous-jacent à la base 2 et la mise en place d'un implant. Aussi, le guide de perçage 4 comprend autant d'alésage 5 que d'implants à mettre en place.

Il a été vu que la base 2 est apte à être fixée à l'os maxillaire ou mandibulaire. Ceci est réalisé au moyen du premier jeu de moyens de fixation 9. Ces moyens de fixation 9 sont prévus pour accueillir chacun une vis ou un pin. Une vis est une vis chirurgicale apte à être vissée dans un os. Un pin est un clou chirurgical apte à être planté dans un os. Selon une autre caractéristique, la base 2 est ainsi fixée à l'os au moyen de vis, de pins ou d'un panachage de vis et de pins.

Avantageusement, la base 2 est fixée à l'os par au moins trois points/moyens de fixation/ vis ou pin. De préférence, la base ne comprend aucun point/moyen de fixation sur sa face palatine. Une fois ainsi fixée, la base 2 sert de référence pour les différents étages du guide 1 successivement montés : le guide de perçage 4 et la prothèse 7.

Il a été vu que la gouttière 3 est assemblée à la base 2. Ceci est réalisé au moyen des moyens de fixation 10a pour la base et 10b pour la gouttière 3. Selon une autre caractéristique, afin d'assurer un maintien plus sûr des étages entre eux, l'assemblage est, au moins pour certains des moyens de fixation, réalisé par des vis.

Ainsi, les moyens de fixation 10a, 10b, 10c et 10d comprennent des platines en regard aptes à venir en appui contre une platine homologue disposées en regard sur l'autre étage. Les moyens de fixations 10a, 10b, 10c et 10d peuvent être de simples appuis ou encore être des appuis doublés d'un élément d'assemblage, telle une vis contre-perçant deux moyens de fixation en regard.

De même, le guide de perçage 4 est assemblé à la base 2. Ceci est réalisé au moyen des moyens de fixation 10a pour la base et 10c pour le guide de perçage 4. Selon une autre caractéristique, afin d'assurer un maintien plus sûr des étages entre eux, l'assemblage est réalisé, au moins pour certains des moyens de fixation, par des vis.

Il a été vu que le guide de perçage 4 comprend au moins un alésage 5 au droit de la position où un implant doit être mis en place. Un alésage 5 est destiné à guider le foret destiné à creuser le trou dans l'os maxillaire ou mandibulaire traité accueillant un implant.

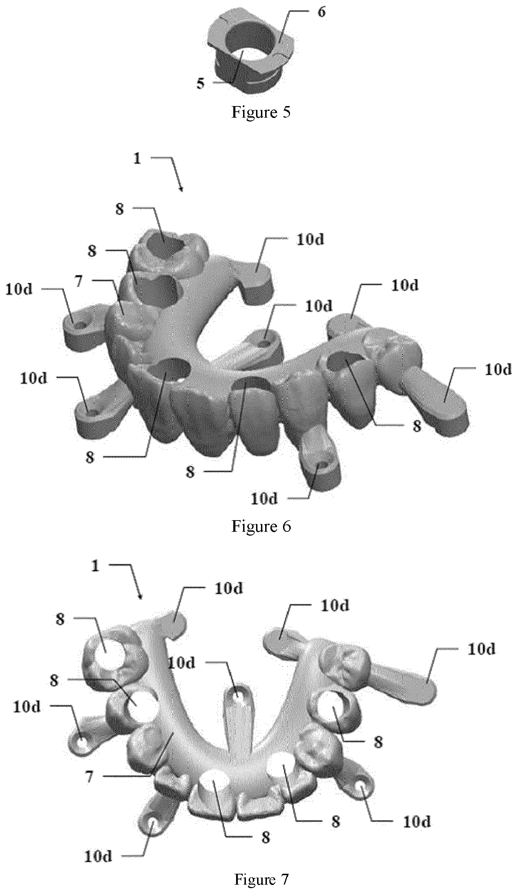

Selon une autre caractéristique, le guide de perçage 4 comprend, pour chaque alésage 5, une douille 6, plus particulièrement illustrée à la figure 5, amovible et clipsable, se logeant dans un orifice au droit de l'implant. Ainsi, l'alésage 5 peut être réalisé de matière avec le guide de perçage 4 ou dans une douille 6 afin de le rendre amovible. L'utilisation d'une douille 6 permet de changer, à loisir, le diamètre de l'alésage 5, de changer localement la matière pour, par exemple, en choisir une plus dure afin de résister à l'abrasion du foret ou encore de réaliser un traitement de surface local.

Le guide 1 tel que décrit précédemment comprend une base 2, une gouttière 3 et un guide de perçage. Un tel guide 1 a son utilité en tant que tel pour la mise en place des implants.

Avantageusement, le guide 1 peut encore comprendre une prothèse 7. Une telle prothèse 7 est plus particulièrement illustrée aux figures 6 et 7. Cette prothèse 7 est apte à être fixée sur la base 2. Ceci est réalisé au moyen des deuxièmes jeux de fixations respectifs 10a pour la base 2 et 10d pour la prothèse 7. De plus la prothèse 7 présente un trou 8 au droit de chaque alésage 5 ou futur implant.

Chaque trou 8 permet le passage au travers de la prothèse 7 d'un pilier implantaire. Un pilier (non représenté) est une cheville sensiblement allongée, comprenant, à une de ses extrémités, une interface, classiquement vissée, destinée à être assemblée avec un implant, et à l'autre de ses extrémités, une interface collée ou vissée avec une prothèse. Chaque trou 8 présente les dimensions de la section maximale d'un pilier afin d'en permettre le passage.

Selon une autre caractéristique, un trou 8 présente un diamètre identique au diamètre d'un pilier, augmenté d'un jeu. Ce jeu permet, en plus d'autoriser le passage d'un pilier au travers de la prothèse 7, de disposer d'une légère latitude de positionnement de la prothèse 7, permettant, entre autres, d'absorber une éventuelle dispersion de positionnement de piliers implantaires, afin d'éviter un hyperstatisme de la prothèse 7.

Comme il peut être déduit des figures et de la description précédente, chacun des étages supérieurs : la gouttière 3, le guide de perçage 4 et la prothèse 7 se fixent alternativement à la base 2, un à la fois. Cette fixation est réalisée, sensiblement en lieu et place, l'un de l'autre. Aussi, la base 2 présente une interface unique. Cette interface est matérialisée par le deuxième jeu de moyens de fixation 10a. Les étages supérieurs : la gouttière 3, le guide de perçage 4 et la prothèse 7 présentent une interface de fixation sensiblement identique d'un étage à l'autre, complémentaire de l'interface de la base 2. Ainsi le deuxième jeu de moyens 10b de la gouttière 3, le deuxième jeu de moyens 10c du guide de perçage 4 et le deuxième jeu de moyens 10d de la prothèse 7 sont sensiblement identiques entre eux : mêmes positions et orientations.

En termes de matériaux, la base 2 est préférentiellement réalisée en titane, en alliage chrome-cobalt ou en résine biocompatible de classe I ou IIa.

La gouttière 3 est préférentiellement réalisée en résine biocompatible de classe I.

Le guide de perçage 4 est préférentiellement réalisé en titane, en alliage chrome-cobalt ou en résine biocompatible de classe I ou Iia. Ceci inclut les éventuelles douilles 6.

La prothèse 7 est préférentiellement réalisée en résine biocompatible de classe IIa.

Ces réalisations, sensiblement en exemplaire unique, du fait du sur mesure adapté au patient, sont avantageusement réalisées par impression 3D ou par usinage.

L'invention concerne encore un procédé de mise en place d'un tel guide 1. Ce procédé comprend les étapes suivantes.

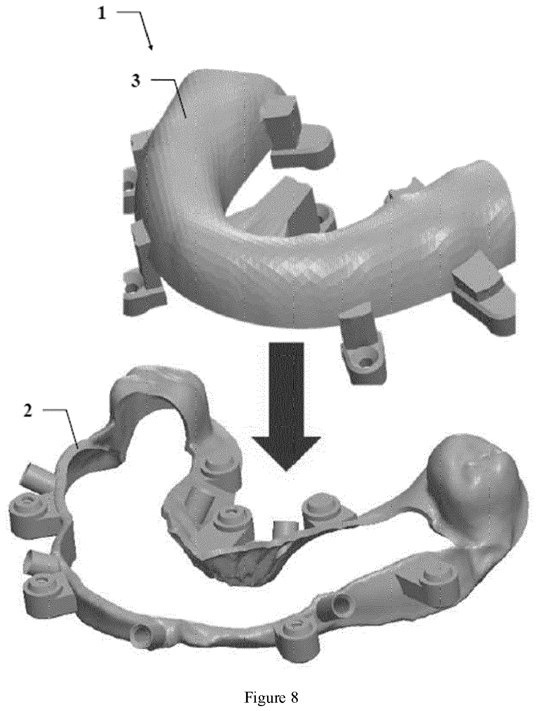

Au cours d'une première étape la base 2 est assemblée avec la gouttière 3, tel qu'illustré à la figure 8. Ceci est réalisé au moyen des deuxièmes jeux de moyens de fixation respectifs 10a et 10b. Cet assemblage assure un positionnement relatif précis. Aussi, les deux étages 2, 3 sont dans le même référentiel.

Au cours d'une deuxième étape, l'assemblage précédent est mis en place en bouche. La gouttière 3 assure, durant cette étape et en combinaison avec la base 2, le positionnement par rapport au référentiel dent ou anatomie restant en bouche de l'assemblage et donc de la base 2. Ceci est réalisé principalement au moyen des moulages de dent 14 formés dans la gouttière 3 et correspondant typiquement aux dents destinées à être ensuite extraites.

Selon une autre caractéristique, le procédé comprend encore les étapes suivantes. Au cours d'une troisième étape, la base 2 est fixée à l'os, de préférence sur la seule face vestibulaire. Ceci s'effectue au moyen du premier jeu de fixations 9 et de vis et/ou de pins traversant lesdites fixations 9.

Grâce à la gouttière 3 qui se reprend par rapport au référentiel dentaire, la base 2 est correctement placée. Après sa fixation à l'os, la base 2 sert de référence, pour la suite des opérations.

Aussi, au cours d'une quatrième étape, il peut être procédé au retrait de la gouttière 3.

Une cinquième étape procède éventuellement à l'extraction des dents, si des dents doivent être extraites. Grâce au jour 11, ces dents sont accessibles au travers de la base 2.

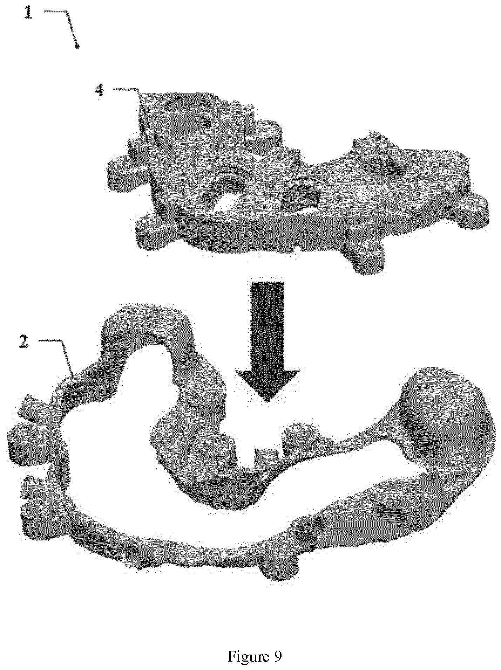

Au cours d'une sixième étape, le guide de perçage 4 remplace la gouttière 3 et est fixé à la base 2, tel qu'illustré à la figure 9. Ceci est réalisé au moyen des deuxièmes jeux de moyens de fixation respectifs 10a et 10c. Cet assemblage assure un positionnement relatif précis. Aussi, les deux étages 2, 4 sont dans le même référentiel.

Au cours d'une septième étape, il est procédé au perçage de l'os, le praticien s'aidant des alésages 5 du guide de perçage 4 pour guider son foret.

Une huitième étape voit la mise en place des implants dans l'os.

Ensuite, au cours d'une neuvième étape, le guide de perçage 4 peut être retiré.

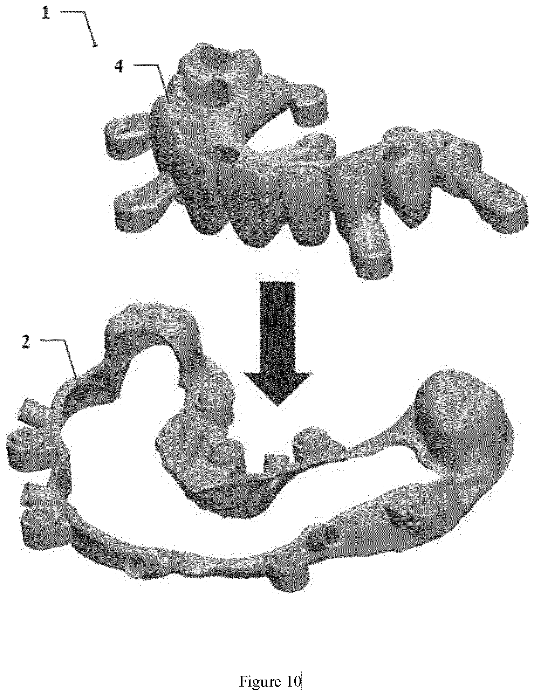

Au cours de la dixième étape, la prothèse 7 remplace le guide de perçage 4 et est fixée à la base 2, tel qu'illustré à la figure 10. Ceci est réalisé au moyen des deuxièmes jeux de moyens de fixation respectifs 10a et 10d. Cet assemblage assure un positionnement relatif précis. Aussi, les deux étages 2, 7 sont dans le même référentiel.

La onzième étape voit la mise en place des piliers et leur assemblage avec les implants. Ceci s'effectue préférentiellement par vissage.

La douzième étape correspond au retrait de la base et à la fixation de la prothèse 7 seule sur les piliers, préférentiellement par collage.

La prothèse 7 est alors solidement fixée sur les implants.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

### Liste des signes de référence

1 : guide chirurgical,
2 : base,
3 : gouttière,
4 : guide de perçage,
5 : alésage,
6 : douille,
7 : prothèse,
8 : trou,
9 : premier jeu de fixation,
10a : deuxième jeu de fixation base,
10b : deuxième jeu de fixation gouttière,
10c : deuxième jeu de fixation guide de perçage,
10d : deuxième jeu de fixation prothèse,
11 : jour,
12 : appui dentaire,
13 : appui lingual ou palatal,
14 : moulage dent.

## Revendications

1. Un guide (1) chirurgical pour la pose d'implants dentaires, **caractérisé en ce qu'**il comprend une base (2) apte à être fixée à l'os maxillaire ou mandibulaire, une gouttière (3) apte à être fixée à la base (2) et à être positionnée dans l'espace par rapport au référentiel dent ou anatomie restant en bouche, et un guide de perçage (4) apte à être fixé à la base (2) et comprenant au moins un alésage (5) de guidage d'un foret **caractérisé en ce que** la base :
- est sensiblement rigide ;
- s'appuie généreusement sur les muqueuses ;
- épouse sensiblement la forme d'un maxillaire ou d'une mandibule et présente une partie centrale disposée sur la face interne de la mâchoire qui constitue un appui lingual ou palatal ; et
- est largement ajourée le long de la crête maxillaire ou mandibulaire, afin de laisser passer des dents encore présentes en début d'opération ou des implants à installer en cours d'opération.

2. Le guide (1) selon la revendication précédente, où la base (2) est fixée à l'os au moyen de vis.

3. Le guide (1) selon la revendications précédentes, où la partie centrale (13) de la base (2) disposée sur la face interne de la mâchoire qui constitue un appui lingual ou palatal ne comprend aucune fixation dans l'os .

4. Le guide (1) selon l'une quelconque des revendications précédentes, où le guide de perçage (4) comprend, pour chaque alésage (5), une douille (6) amovible et clipsable.

5. Le guide (1) selon l'une quelconque des revendications précédentes, comprenant encore une prothèse (7) apte à être fixée sur la base (2) et présentant un trou (8) au droit de chaque alésage (5).

6. Le guide (1) selon la revendication précédente, où un trou (8) présente un diamètre supérieur d'un jeu au diamètre d'un pilier, apte à être fixé à un implant par une extrémité et à la prothèse (7) par l'autre extrémité.

7. Le guide (1) selon l'une quelconque des revendications 5 ou 6, où la gouttière (3) est fixée à la base (2) au moyen de vis, le guide de perçage (4) est fixé à la base (2) au moyen de vis et la prothèse (7) est fixée à la base (2) au moyen de vis.

8. Le guide (1) selon l'une quelconque des revendications 5 à 7, où la gouttière (3), le guide de perçage (4) et la prothèse (7) se fixent alternativement à la base (2), un à la fois, sensiblement en lieu et place l'un de l'autre et présentent une interface de fixation (10b, 10c, 10d) sensiblement identique, apte à être fixée à une interface (10a) de la base (2).

9. Le guide (1) selon l'une quelconque des revendications 5 à 8, où la base (2) est réalisée en titane, en alliage chrome-cobalt ou en résine biocompatible de classe I ou IIa, la gouttière (3) est réalisée en résine biocompatible de classe I, le guide de perçage (4) est réalisé en titane, en alliage chrome-cobalt ou en résine biocompatible de classe I ou IIa et la prothèse (7) est réalisée en résine biocompatible de classe IIa.
